# EUROPÄISCHE PATENTSCHRIFT

(11) **EP 1 440 642 B1**
(45) Veröffentlichungstag und Bekanntmachung des Hinweises auf die Patenterteilung: **10.08.2005**
(21) Anmeldenummer: 04001041.5
(22) Anmeldetag: 20.01.2004
(51) Int. Cl.: A47J 31/42, A47J 42/50

(54) **Kaffeemühle sowie Kaffeeautomat mit einer Kaffeemühle**
Coffee mill and coffee machine equipped with such a mill
Moulin à café et machine à café équipée d'un tel moulin

(30) Priorität: 22.01.2003 DE 20300933 U
(43) Veröffentlichungstag der Anmeldung: 28.07.2004
(73) Patentinhaber: WIK Far East Ltd., North Point, Hong Kong (CN)
(72) Erfinder: Steckhan, Markus, 45481 Mülheim (DE)
(74) Vertreter: Schröter & Haverkamp

(56) Entgegenhaltungen:
- DE-A- 19 606 076
- DE-C- 594 983

## Beschreibung

Die Erfindung betrifft eine Kaffeemühle mit einem durch Ausbilden von zumindest zwei Fächern geteilten Kaffeebohnenbehälter, mit einem unterseitigen, für beide Fächer gemeinsamen Ausgabeschacht, mit einem unterhalb des Ausgabeschachtes angeordneten Mahlwerk und mit einem Verschlusselement zum wahlweisen Verschließen des Ausgangs zumindest eines Faches. Ferner betrifft die Erfindung einen Kaffeeautomat mit einer Kaffeemühle, umfassend einen Kaffeebohnenbehälter mit einem unterseitigen Ausgabeschacht und mit einem unterhalb des Ausgabeschachtes angeordneten Mahlwerk.

Aus DE 196 06 076 A1 ist eine Kaffeemühle bekannt, die einen Kaffeebohnenbehälter mit einem unterseitigen Ausgabeschacht umfasst. Der Ausgabeschacht des Kaffeebohnenbehälters mündet in den Eingang eines Mahlwerkes. Der Kaffeebohnenbehälter selbst ist in zwei Fächer unterteilt, so dass in diesem zwei unterschiedliche Kaffeesorten bevorratet werden können. Im unteren Bereich des Kaffeebohnenbehälters ist ein Leitkonus angeordnet, der zum seitlichen Zuführen der Kaffeebohnen in den Ausgabeschacht dient. Teil des Kaffeebohnenbehälters ist ferner ein Verschlusselement, welches drehbar gelagert den Kaffeebohnenbehälter durchgreift. Das Verschlusselement ist nach Art einer nach unten offenen Tasse ausgebildet, an dessen Oberseite eine Welle mit einem oberseitigen Drehknopf angebracht ist. Die Welle selbst ist in einem rohrartigen, den Kaffeebohnenbehälter durchgreifenden Körper gelagert. Das Verschlusselement ist umfänglich zum Teil geöffnet. Mit seinen übrigen Abschnitten kann das Verschlusselement vor die untere Ausgabeöffnung eines Faches gebracht werden, um wahlweise Kaffeebohnen aus dem einen Fach oder Kaffeebohnen aus dem anderen Fach in den Ausgabeschacht einzulassen und dem Mahlwerk zuzuführen. Somit können bei dieser vorbekannten Kaffeemühle Kaffeebohnen unterschiedlicher Sorten gemahlen werden, ohne zuvor den Kaffeebohnenbehälter entleeren zu müssen.

Auch wenn grundsätzlich die Funktionalität dieser Kaffeemühle in der beschriebenen Art und Weise gegeben ist, können sich Nachteile bei der Handhabung der Kaffeemühle ergeben. Beispielsweise können Bohnen eine Drehbewegung des Verschlusselementes blockieren, so dass eine Betätigung des Verschlusselementes durch Drehen des Knopfes nur mit einer nicht unerheblichen Kraft - wenn überhaupt - möglich ist. Ferner ist man in der Gestaltung des Kaffeebohnenbehälters und insbesondere seines Deckels beschränkt, da in jedem Fall sichergestellt sein muss, dass die Betätigungsorgane des Verschlusselementes - Welle und Drehknopf - sich an ihrer bestimmungsgemäßen Position befinden. Somit lässt sich beispielsweise ein Klappdeckel kaum realisieren.

Kaffeeautomaten bzw. Kaffeevollautomaten verfügen über einen Kaffeebohnenbehälter zum Bevorraten von Kaffeebohnen. Bei solchen Automaten wird bei jeder Anforderung frisch gemahlenes Kaffeepulver für die Kaffeezubereitung verwendet. Ein dem Automaten zugehöriges Mahlwerk ist für die Bereitstellung der jeweils benötigten Kaffeemehlmenge verantwortlich. Der Kaffeebohnenbehälter umfasst ein Behältnis mit einem Ausgabeschacht, der auf den Eingang des Mahlwerkes aufgesetzt ist. Der Ausgabeschacht des Behältnisses trägt in aller Regel oberseitig einen Leitkonus, damit die Kaffeebohnen dem Mahlwerk seitlich zugeführt werden. Das Behältnis ist unterseitig offen.

Befestigt ist der Kaffeebohnenbehälter mit dem Gehäuse des Kaffeeautomaten mittels eines Kupplungsringes, der an einem entsprechend konzipierten Gegenstück, beispielsweise nach Art eines Bajonettes festlegbar ist.

Die Kaffeebohnenbehälter derartiger Kaffeeautomaten verfügen über einen Behälter zur Aufnahme der Kaffeebohnen und über einen seitlich dazu angeordneten Schacht zum Zuführen von bereits gemahlenem Kaffeepulver an dem Mahlwerk vorbei, damit dieses unmittelbar in die Brühkammer eingeschüttet werden kann.

Es besteht jedoch der Wunsch, auch bei solchen Kaffeeautomaten einen Kaffeebohnenbehälter zur Verfügung zu haben, in dem zumindest zwei unterschiedliche Kaffeebohnensorten bevorratet werden können.

Ausgehend von diesem diskutierten Stand der Technik liegt der Erfindung daher die Aufgabe zugrunde, eine Kaffeemühle sowie einen damit ausgerüsteten Kaffeeautomaten dergestalt weiterzubilden, dass die zu der eingangs beschriebenen Kaffeemühle aufgezeigten Nachteile zumindest weitestgehend vermieden sind.

Diese Aufgabe wird zum einen dadurch gelöst, dass das Verschlusselement mit dem Mahlwerk eine gegenständliche Einheit bildet und der Kaffeebohnenbehälter drehbar gegenüber der aus dem Verschlusselement und dem Mahlwerk gebildeten Einheit angeordnet ist.

Ferner wird die Kaffeeautomaten bezogene Aufgabe erfindungsgemäß dadurch gelöst, dass der Kaffeebohnenbehälter durch Ausbilden von zumindest zwei Fächern geteilt ist, wobei die Fächer des Kaffeebohnenbehälters in den Ausgabeschacht münden, und dass der Kaffeeautomat ein Verschlusselement zum wahlweisen Verschließen des Ausgangs zumindest eines Faches aufweist, wobei das Verschlusselement mit dem Mahlwerk eine gegenständliche Einheit bildet und der Kaffeebohnenbehälter drehbar gegenüber der aus dem Verschlusselement und dem Mahlwerk gebildeten Einheit angeordnet ist.

Bei einer solchen Kaffeemühle ist das Verschlusselement grundsätzlich dem Mahlwerk zugeordnet. Der Kaffeebohnenbehälter selbst braucht aus diesem Grunde keine zur Ansteuerung des Verschlusselementes beweglichen Teile aufzunehmen oder zutragen. Das Verschlusselement ist gegenüber einer Drehbewegung des Kaffeebohnenbehälters ortsfest am Mahlwerk angeordnet. Der Kaffeebohnenbehälter selbst ist dagegen drehbar gegenüber dem Mahlwerk zwischen zumindest zwei Endpositionen gelagert. Das Verschlusselement bedeckt zum Teil den Eingang des Mahlwerkes. Die jeweilige Öffnung eines Faches zum Ausgeben von Kaffeebohnen entspricht im wesentlichen der Kontur des von dem Verschlusselement freigelassenen Raumes. Somit kann durch entsprechendes Drehen des Kaffeebohnenbehälters um seine Achse jeweils die Ausgabeöffnung eines Faches mit der gewünschten Kaffeebohnensorte in eine fluchtende Anordnung mit dem von dem Verschlusselement nicht bedeckten Raum gebracht werden, so dass die in diesem Fach befindlichen Kaffeebohnen dem Mahlwerk zugeführt werden können. Besonders vorteilhaft bei dieser Kaffeemühle ist, dass ein Sortenwechsel durch Verdrehen des Kaffeebohnenbehälters herbeigeführt wird. Dieser weist in aller Regel einen ausreichend großen Durchmesser auf, so dass ohne weiteres auch bei Vorhandensein von Kaffeebohnen zwischen dem Verschlusselement und der jeweiligen Ausgabeöffnung eines Faches verschwenkt werden kann, da aufgrund des großen Hebels eine solche Kaffeebohne ohne weiteres zur Seite gedrückt werden könnte. Insbesondere besteht die Möglichkeit, den Kaffeebohnenbehälter mit zwei Händen zu verdrehen.

Zwischen dem Verschlusselement und der jeweiligen Ausgabeöffnung der Fächer des Kaffeebohnenbehälters ist zweckmäßigerweise nur ein Bewegungsspalt geringer Weite belassen, dessen lichte Weite deutlich geringer ist als der durchschnittliche Durchmesser einer Kaffeebohne.

Das Verschlusselement kann grundsätzlich nach Art einer die obere Eingangsöffnung des Schachtes des Mahlwerkes eingelegte Scheibe ausgebildet sein. In diesem Fall weist der Kaffeebohnenbehälter keinen Leitkonus auf, sondern die Öffnungen der Fächer sind unmittelbar in den Boden des Kaffeebohnenbehälters eingebracht.

In einer anderen Ausgestaltung ist dagegen vorgesehen, dass der Kaffeebohnenbehälter ein Leitelement, beispielsweise einen Leitkonus zum seitlichen Zuführen der Kaffeebohnen in den Ausgabeschacht aufweist. Das Verschlusselement ist dann an die unterseitige Kontur des Leitelementes angepasst und beispielsweise tassenförmig nach unten offen ausgebildet.

Das Verschlusselement ist zweckmäßigerweise lösbar an dem Mahlwerk drehfest gehalten, damit nach Abnahme des Kaffeebohnenbehälters und nach Entfernen des Verschlusselementes das Mahlwerk oberseitig zugänglich ist. Zweckmäßig ist eine Ausgestaltung, bei der das Mahlwerk einen oberen Absatz aufweist, auf dem das Verschlusselement aufliegt. Zum Bewirken einer Drehentkopplung gegenüber einer Drehbewegung des darüber angeordneten Kaffeebohnenbehälters kann das Verschlusselement einen radial abragenden Nocken tragen, der in eine entsprechende Ausnehmung des Gehäuses des Mahlwerkes eingreift. Zweckmäßigerweise trägt der Kaffeebohnenbehälter unterseitig einen umlaufenden und den Ausgabeschacht einschließenden Kragen, in den das Gehäuse des Mahlwerkes eingreift:

Ein mit einer solchen Kaffeemühle ausgerüsteter Kaffeeautomat kann somit unterschiedliche Kaffeesorten bevorraten. Der Kaffeebohnenbehälter eines solchen Kaffeeautomaten kann in unterschiedliche Drehstellungen zu dem Mahlwerk gebracht werden, wobei ebenfalls vorgesehen sein kann, dass in einer Position bereits gemahlenes Kaffeepulver durch einen seitlichen Zuführschacht an dem Mahlwerk vorbei in die Brühkammer des Kaffeeautomaten eingefüllt werden kann.

Die Fächerteilung des Kaffeebohnenbehälters kann durch lösbare Wände realisiert sein, die in entsprechende Nuten des Kaffeebohnenbehälters eingesetzt sein können. Bei einer solchen Ausgestaltung ist es möglich, die Kaffeemühle mit herausgenommenen Trennwänden auch nur mit einer einzigen Kaffeebohnensorte zu befüllen.

Nachfolgend ist die Erfindung anhand eines Ausführungsbeispiels unter Bezugnahme auf die beigefügten Figuren beschrieben. Es zeigen:
- **Fig. 1:**: eine schematisierte Ansicht eines Kaffeeautomaten mit einer integrierten Kaffeemühle,
- **Fig. 2:**: einen schematisierten Schnitt durch die Kaffeemühle des Kaffeeautomaten der Figur 1 im Bereich des unteren Abschlusses des Kaffeebohnenbehälters in einer ersten Stellung und
- **Fig. 3:**: die Anordnung der Figur 2 in einer weiteren Stellung des Kaffeebohnenbehälters gegenüber dem Mahlwerk.

Ein Kaffeeautomat 1 ist als Vollautomat konzipiert und umfasst neben den beiden sichtbaren Kaffeeauslässen 2, 3 ein Dampfrohr 4, an dessen freiem Ende eine Dampfdüse 5 angeordnet ist. In das Gehäuse 6 des Kaffeeautomaten 1 ist eine Aufnahme 7 eingelassen, in der eine Bedienkonsole 8 eingesetzt ist. Die Bedienkonsole 8 umfasst als elektrische Schalter mehrere Taster T, mit denen die unterschiedlichen Funktionen des Kaffeeautomaten 1 ausgelöst werden können. Mehrere LED's L dienen als Kontrolleinzeigemittel zum Anzeigen, dass ein bestimmter Taster T betätigt worden ist, oder auch als Auswahlanzeiger, wenn mit einem Taster T unterschiedliche Funktionen ausübbar sind, sowie zum Darstellen von Fehlfunktionen. In dem Gehäuse 6 des Kaffeeautomaten 1 ist ein Mahlwerk zum Mahlen von Kaffeebohnen angeordnet. Zum Bevorraten von Kaffeebohnen ist dem Kaffeeautomaten 1 ein Kaffeebohnenbehälter 9 zugeordnet, der mittels eines Kupplungsringes mit dem Gehäuse 6 des Kaffeeautomaten 1 verbunden ist. Der Kaffeebohnenbehälter 9 ist aufgesetzt auf eine oberseitige Öffnung des Gehäuses 6, unterhalb der das Mahlwerk positioniert ist.

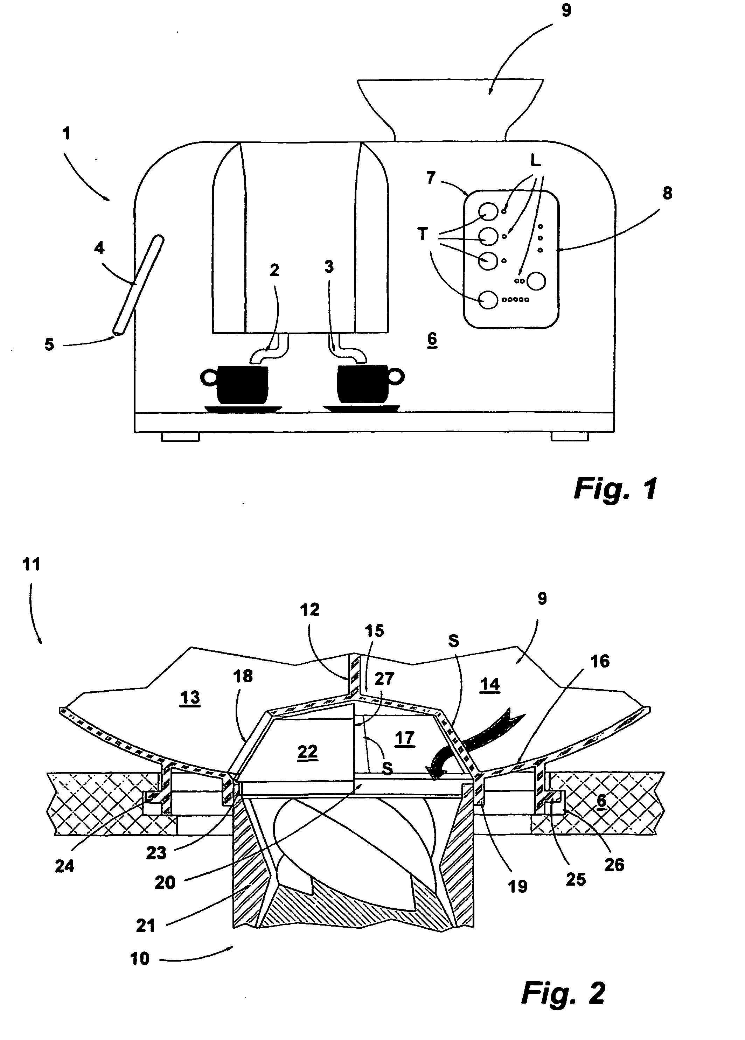

Der Kaffeeautomat 1 verfügt über eine aus dem Kaffeebohnenbehälter 9 und einem Mahlwerk 10 gebildete Kaffeemühle 11, die in einer geschnittenen Teildarstellung in Figur 2 dargestellt ist. Der Kaffeebohnenbehälter 9 ist durch eine Trennwand 12 in zwei Fächer 13, 14 unterteilt, so dass in dem Kaffeebohnenbehälter 9 zwei unterschiedliche Kaffeebohnensorten bevorratet werden können. Im unteren Bereich des Kaffeebohnenbehälters 9 befindet sich ein Leitkonus 15, der sich über mehrere Stege S am Boden 16 des Kaffeebohnenbehälters 9 abstützt. Zwischen den Stegen S des Leitkonus 15 sind mehrere Ausgabeöffnungen angeordnet, von denen in Figur 2 zwei Ausgabeöffnungen 17, 18 erkennbar sind. Die Anordnung der Stege S und der Ausgabeöffnungen 17, 18 sind so konzipiert, dass eine solche Ausgabeöffnung, 17, 18 entweder in das Fach 13 oder das Fach 14 mündet.

An dem Boden 16 des Kaffeebohnenbehälters 9 ist ein umlaufender Kragen 19 nach unten abragend angeformt. Durch den Kragen 19 und die Stege S ist ein Ausgabeschacht 20 eingeschlossen. Von unten in den Ausgabeschacht 20 ist das Mahlwerk 10 mit seinem Gehäuse 21 eingreifend angeordnet. Das Mahlwerk 21 ist fest in dem Kaffeeautomaten 1 montiert.

Dem Mahlwerk 10 zugehörig ist ein Verschlusselement 22, dessen Ausgestaltung der Kontur der Unterseite des Leitkonus 15 entspricht. Bei dem Verschlusselement 22 handelt es sich somit in Annäherung um ein Viertel-Kugelsegment. Das Verschlusselement 22 ist auf einen Absatz im Bereich des Einganges des Mahlwerkes 10 aufgesetzt und über einen Nokken 23 drehschlüssig mit dem Mahlwerk 10 verbunden.

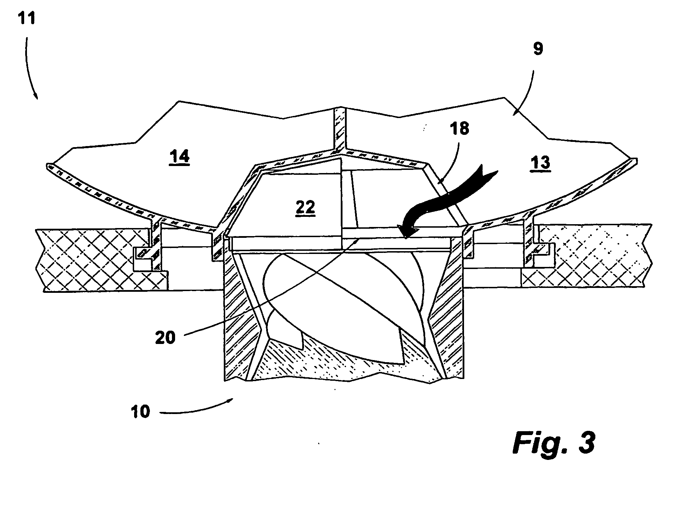

Der Kaffeebohnenbehälter 9 ist mit dem Gehäuse 6 des Kaffeeautomaten 1 durch eine Bajonettverriegelung verbunden, von der in Figur 2 zwei dem Kaffeebohnenbehälter 9 zugeordnete Bajonettnocken 24, 25 und eine als Teil des Gehäuses 6 vorgesehene Bajonettnut 26 erkennbar sind. Der Kaffeebohnenbehälter 9 stützt sich - wie aus Figur 2 erkennbar - an dem Gehäuse 6 des Kaffeebohnenbehälters unterseitig ab. Der Kaffeebohnenbehälter 9 ist gegenüber dem Mahlwerk 10 und den übrigen Bestandteilen des Kaffeeautomaten 9 um seine vertikale Achse drehbar. In der in Figur 2 dargestellten Stellung des Kaffeebohnenbehälters 9 gegenüber dem Mahlwerk 10 ist die Ausgabeöffnung 17 unverschlossen, so dass in dieser Stellung in dem Fach 14 befindliche Kaffeebohnen den Eingang des Mahlwerkes 10 beaufschlagen, wie dies durch den die Flussrichtung der Kaffeebohnen symbolisierenden Pfeil in dieser Figur angedeutet ist. Kaffeebohnen, die in dem Fach 13 des Kaffeebohnenbehälters 9 enthalten sind, können in den Ausgabeschacht 20 nicht eindringen, da die Ausgabeöffnung 18 durch das Verschlusselement 22 verschlossen ist. Die in dem Fach 13 befindlichen Kaffeebohnen können jedoch dann in den Ausgabeschacht 20 eingebracht und dem Mahlwerk 10 zugeführt werden, wenn der Kaffeebohnenbehälter um 180° in seine andere Stellung gedreht wird. Diese ist in Figur 3 gezeigt. Da das Verschlusselement 22 drehentkoppelt bezüglich einer Drehbewegung des Kaffeebohnenbehälters 9 ist, verbleibt dieses in seiner ursprünglichen Position. Die Ausgabeöffnung 18 des Faches 13 kommt sodann in die Position, in der in der bevor beschriebenen Stellung des Kaffeebohnenbehälters 9 die Ausgabeöffnung 17 angeordnet war. Folglich kann nunmehr ein Kaffee mit dem Kaffeeautomaten 1 gebrüht werden, dessen Kaffeebohnen in dem Fach 13 des Kaffeebohnenbehälters 9 enthalten sind und über die Ausgabeöffnung 18 des Faches 13 in den Ausgabeschacht 20 eingebracht und dem Mahlwerk 10 zugeführt worden sind.

Zweckmäßigerweise ist die die offene Seite des Verschlusselementes 22 begrenzende Stirnseite 27 angeschrägt, und zwar zu dem von dem Verschlusselement 22 eingeschlossenen Raum hin.

Die Beschreibung der Erfindung macht deutlich, dass mit der beschriebenen Kaffeemühle nicht nur eine solche an sich mit einfachen Mitteln zum Wählen unterschiedlicher Kaffeesorten sondern auch ein Kaffeeautomat mit einer solchen Kaffeemühle bereitgestellt ist. Der Kaffeebohnenbehälter einer solchen Kaffeemühle kann auch mehr als zwei Fächer aufweisen.

Die unterschiedlichen Stellungen des Kaffeebohnenbehälters zum Mahlwerk sind zweckmäßigerweise haptisch kenntlich gemacht, etwa durch eine Rastung, um einem Benutzer auf diese Weise das Erreichen einer Stellung kenntlich zu machen. Grundsätzlich kann die Kaffeemühle dergestalt konzipiert sein, dass ein Positionswechsel des Kaffeebohnenbehälters geräteseitig erkannt wird und dass nach erfolgter Umschaltung das Mahlwerk für eine kurze Zeitdauer eingeschaltet wird, um die restlichen Bohnen der zuvor gewünschten Kaffeesorte aus dem Mahlwerk zu entfernen. Zweckmäßigerweise wird das beim Mahlen dieser Restbohnen erzeugte Kaffeemehl einem gesonderten Behälter zugeführt. Bei Einsatz einer solchen Kaffeemühle als Teil eines Kaffeeautomaten kann dieses Kaffeemehl in den Tresterbehälter gefördert werden.

### Bezugszeichenliste

- 1: Kaffeemaschine
- 2: Kaffeeauslass
- 3: Kaffeeauslass
- 4: Dampfrohr
- 5: Dampfdüse
- 6: Gehäuse
- 7: Aufnahme
- 8: Bedienkonsole
- 9: Kaffeebohnenbehälter
- 10: Mahlwerk
- 11: Kaffeemühle
- 12: Trennwand
- 13: Fach
- 14: Fach
- 15: Leitkonus
- 16: Boden
- 17: Ausgabeöffnung
- 18: Ausgabeöffnung
- 19: Kragen
- 20: Ausgabeschacht
- 21: Gehäuse
- 22: Verschlusselement
- 23: Nocke
- 24: Bajonettnocke
- 25: Bajnoettnocke
- 26: Bajonettnut
- 27: Stirnseite

- L: LED
- S: Steg
- T: Taster

## Patentansprüche

1. Kaffeemühle mit einem durch Ausbilden von zumindest zwei Fächern (13, 14) geteilten Kaffeebohnenbehälter (9), mit einem unterseitigen, für beide Fächer (13, 14) gemeinsamen Ausgabeschacht (20), mit einem unterhalb des Ausgabeschachtes (20) angeordneten Mahlwerk (10) und mit einem Verschlusselement (22) zum wahlweisen Verschließen des Ausgangs (17, 18) zumindest eines Faches (13, 14), **dadurch gekennzeichnet, dass** das Verschlusselement (22) mit dem Mahlwerk (10) eine gegenständliche Einheit bildet und der Kaffeebohnenbehälter (9) drehbar gegenüber der aus dem Verschlusselement (22) und dem Mahlwerk (10) gebildeten Einheit angeordnet ist.

2. Kaffeemühle nach Anspruch 1, **dadurch gekennzeichnet, dass** das Verschlusselement nach Art einer Scheibe ausgebildet ist, durch welche der oberseitig offene Eingang des Mahlwerkes anteilig verschlossen ist.

3. Kaffeemühle nach Anspruch 1, **dadurch gekennzeichnet, dass** der Kaffeebohnenbehälter (9) ein Leitelement (15) zum seitlichen Zuführen von Kaffeebohnen in den Ausgabeschacht (20) aufweist und das Verschlusselement (22) unterhalb des Leitelementes (15) angeordnet und von seiner Kontur an die Unterseite des Leitelements (15) und der durch dieses gebildeten Ausgänge (17, 18) der Fächer (13, 14) angepasst ist.

4. Kaffeemühle nach Anspruch 2 oder 3, **dadurch gekennzeichnet, dass** das Verschlusselement (22) formschlüssig bezogen auf die Drehbarkeit des Kaffeebohnenbehälters (9) mit dem Mahlwerk bzw. seinem Gehäuse (21) verbunden ist.

5. Kaffeemühle nach Anspruch 4, **dadurch gekennzeichnet, dass** das Verschlusselement (22) einen radial abragenden Nocken trägt, der in eine Aufnahme des Mahlwerkes (10) bzw. seines Gehäuses eingreift.

6. Kaffeemühle nach einem der Ansprüche 1 bis 5, **dadurch gekennzeichnet, dass** der Kaffeebohnenbehälter (9) einen umlaufenden, den Ausgabeschacht (20) einschließenden Kragen (19) aufweist, in den das Mahlwerk (10) hineinreicht.

7. Kaffeemühle nach einem der Ansprüche 1 bis 6, **dadurch gekennzeichnet, dass** der Kaffeebohnenbehälter (9) lösbar gegenüber dem Mahlwerk (10) und mit diesem durch eine Bajonettverriegelung verbunden ist.

8. Kaffeemühle nach einem der Ansprüche 1 bis 7, **dadurch gekennzeichnet, dass** die Kaffeemühle (10) Teil eines Kaffeeautomaten (1) ist.

9. Kaffeeautomat mit einer Kaffeemühle, umfassend einen Kaffeebohnenbehälter (9) mit einem unterseitigen Ausgabeschacht (20) und mit einem unterhalb des Ausgabeschachtes (20) angeordneten Mahlwerk (10), **dadurch gekennzeichnet, dass** der Kaffeebohnenbehälter (9) durch Ausbilden von zumindest zwei Fächern (13, 14) geteilt ist, wobei die Fächer (13, 14) des Kaffeebohnenbehälters (9) in den Ausgabeschacht (20) münden, und dass der Kaffeeautomat (1) ein Verschlusselement (22) zum wahlweisen Verschließen des Ausgangs (17, 18) zumindest eines Faches (13, 14) aufweist, wobei das Verschlusselement (22) mit dem Mahlwerk (10) eine gegenständliche Einheit bildet und der Kaffeebohnenbehälter (9) drehbar gegenüber der aus dem Verschlusselement (22) und dem Mahlwerk (10) gebildeten Einheit angeordnet ist.

10. Kaffeeautomat nach Anspruch 9, **dadurch gekennzeichnet, dass** das Verschlusselement nach Art einer Scheibe ausgebildet ist, durch welche der oberseitig offene Eingang des Mahlwerkes anteilig ver schlossen ist.

11. Kaffeeautomat nach Anspruch 9, **dadurch gekennzeichnet, dass** der Kaffeebohnenbehälter (9) ein Leitelement (15) zum seitlichen Zuführen von Kaffeebohnen in den Ausgabeschacht (20) aufweist und das Verschlusselement (22) unterhalb des Leitelementes (15) an geordnet und von seiner Kontur an die Unterseite des Leitelements (15) und der durch dieses gebildeten Ausgänge (17, 18) der Fächer (13, 14) angepasst ist.

12. Kaffeeautomat nach Anspruch 9 oder 10, **dadurch gekennzeichnet, dass** das Verschlusselement (22) formschlüssig bezogen auf die Drehbarkeit des Kaffeebohnenbehälters (9) mit dem Mahlwerk (10) bzw. seinem Gehäuse (21) verbunden ist.

13. Kaffeeautomat nach Anspruch 12, **dadurch gekennzeichnet, dass** das Verschlusselement (22) einen radial abragenden Nocken (23) trägt, der in eine Aufnahme des Mahlwerkes (10) bzw. seines Gehäuses (21) eingreift.

14. Kaffeeautomat nach einem der Ansprüche 9 bis 13, **dadurch gekennzeichnet, dass** der Kaffeebohnenbehälter (9) einen umlaufenden, den Ausgabeschacht (20) einschließenden Kragen (19) aufweist, in den das Mahlwerk (10) hineinreicht.

15. Kaffeeautomat nach einem der Ansprüche 9 bis 14, **dadurch gekennzeichnet, dass** der Kaffeebohnenbehälters zu seiner Unterteilung in die zwei zumindest Fächer eine aus dem Kaffeebohnenbehälter herausnehmbare Wand aufweist.

16. Kaffeeautomat nach einem der Ansprüche 9 bis 15, **dadurch gekennzeichnet, dass** der Kaffeebohnenbehälter (9) lösbar gegenüber dem Mahlwerk (10) und mit diesem durch eine Bajonettverriegelung verbunden ist.

## Revendications

1. Moulin à café comportant un réservoir à café en grains (9) séparé en au moins deux compartiments (13, 14) avec, sur la face inférieure, un puits de distribution (20) commun aux deux compartiments (13, 14), avec un broyeur (10) disposé sous le puits de distribution (20) et avec un élément de fermeture (22) pour fermer au choix la sortie (17, 18) d'au moins un compartiment (13, 14) **caractérisé en ce que** l'élément de fermeture (22) forme avec le broyeur (10) une unité d'objet et le réservoir à café en grains (9) est disposé de manière rotative par rapport à l'unité formée par l'élément de fermeture (22) et le broyeur (10).

2. Moulin à café selon la revendication 1 **caractérisé en ce que** l'élément de fermeture est conformé à la manière d'un disque lequel ferme partiellement, sur la face supérieure, l'entrée ouverte du broyeur.

3. Moulin à café selon la revendication 1 **caractérisé en ce que** le réservoir à café en grains (9) présente un élément de guidage (15) pour permettre l'amenée latérale de grains de café dans le puits de distribution (20) et que l'élément de fermeture (22) est disposé sous l'élément de guidage (15) et adapté par son profil à la face inférieure de l'élément de guidage (15) et aux sorties (17, 18) des compartiments (13, 14) formées par ce dernier.

4. Moulin à café selon la revendication 2 ou 3 **caractérisé en ce que** l'élément de fermeture (22) est relié par complémentarité de forme au broyeur ou à son carter (21) si l'on se réfère à la possibilité de rotation du réservoir à café en grains (9).

5. Moulin à café selon la revendication 4 **caractérisé en ce que** l'élément de fermeture (22) supporte un taquet en saillie radiale, qui s'engage dans un logement du broyeur (10) ou de son carter (21).

6. Moulin à café selon l'une des revendications 1 à 5 **caractérisé en ce que** le réservoir à café en grains (9) présente un épaulement (19) sur tout le pourtour, englobant le puits de distribution (20), dans lequel s'engage le broyeur (10).

7. Moulin à café selon l'une des revendications 1 à 6 **caractérisé en ce que** le réservoir à café en grains (9) est amovible par rapport au broyeur (10) et qu'il est relié à ce dernier au moyen d'un verrouillage baïonnette.

8. Moulin à café selon l'une des revendications 1 à 7 **caractérisé en ce que** le moulin à café (11) fait partie d'une machine à café (1).

9. Machine à café avec un moulin à café comprenant un réservoir à café en grains (9) avec un puits de distribution (20) sur la face inférieure et avec un broyeur (10) disposé sous le puits de distribution (20) **caractérisé en ce que** le réservoir à café en grains (9) est séparé en au moins deux compartiments (13, 14), les compartiments (13, 14) du réservoir à café en grains (9) débouchant dans le puits de distribution (20) et **en ce que** la machine à café (1) comporte un élément de fermeture (22) pour fermer au choix la sortie (17, 18) d'au moins un compartiment (13, 14), l'élément de fermeture (22) formant avec le broyeur (10) une unité d'objet et le réservoir à café en grains (9) étant disposé de manière rotative par rapport à l'unité formée par l'élément de fermeture (22) et le broyeur (10).

10. Machine à café selon la revendication 9 **caractérisée en ce que** l'élément de fermeture est conformé à la manière d'un disque lequel ferme partiellement, sur la face supérieure, l'entrée ouverte du broyeur.

11. Machine à café selon la revendication 9 **caractérisée en ce que** le réservoir à café en grains (9) comporte un élément de guidage (15) pour permettre l'amenée latérale de grains de café dans le puits de distribution (20) et que l'élément de fermeture (22) est disposé sous l'élément de guidage (15) et adapté par son profil à la face inférieure de l'élément de guidage (15) et aux sorties (17, 18) des compartiments (13, 14) formées par ce dernier.

12. Machine à café selon la revendication 9 ou 10 **caractérisée en ce que** l'élément de fermeture (22) est relié par complémentarité de forme au broyeur (10) ou à son carter (21) si l'on se réfère à la possibilité de rotation du réservoir à café en grains (9).

13. Machine à café selon la revendication 12 **caractérisée en ce que** l'élément de fermeture (22) supporte un taquet (23) en saillie radiale, qui s'engage dans un logement du broyeur (10) ou de son carter (21).

14. Machine à café selon l'une des revendications 9 à 13 **caractérisée en ce que** le réservoir à café en grains (9) comporte un épaulement (19) sur tout le pourtour, englobant le puits de distribution (20), dans lequel s'engage le broyeur (10).

15. Machine à café selon l'une des revendications 9 à 14 **caractérisée en ce que** le réservoir à café en grains comporte, pour pouvoir être subdivisé en au moins deux compartiments, une paroi qui peut être extraite du réservoir à café en grains.

16. Machine à café selon l'une des revendications 9 à 15 **caractérisée en ce que** le réservoir à café en grains (9) est amovible par rapport au broyeur (10) et qu'il est relié à ce dernier au moyen d'un verrouillage baïonnette.

## Claims

1. Coffee mill including a coffee bean hopper (9), which is divided by developing at least two compartments (13, 14), said coffee bean hopper having a delivery shaft (20) at the bottom which is common to both compartments (13, 14), a grinding means (10) which is disposed underneath the delivery shaft (20) and a closing member (22) for the optional closing of the outlet (17, 18) at least of one compartment (13, 14), **characterised in that** the closing member (22) and the grinding means (10) together form one unit and the coffee bean hopper (9) is disposed so as to be rotatable relative to the unit formed by the closing member (22) and the grinding means (10).

2. Coffee mill according to claim 1, **characterised in that** the closing member is in the form of a disc, via which the inlet of the grinding means, which is open at the top, is closed in a proportional manner.

3. Coffee mill according to claim 1, **characterised in that** the coffee bean hopper (9) includes a conducting element (15) for the supplying of coffee beans to the side into the delivery shaft (20) and the closing member (22) is disposed underneath the conducting element (15) and by its outline is adapted to the bottom of the conducting element (15) and to the outlets (17, 18) of the compartments (13, 14) formed by the said conducting element.

4. Coffee mill according to claim 2 or 3, **characterised in that** the closing member (22) is connected to the grinding means or respectively its housing (21) in a form-locking manner with reference to the rotatability of the coffee bean hopper (9).

5. Coffee mill according to claim 4, **characterised in that** the closing member (22) supports a radially protruding cam, which engages in a receiving means of the grinding means (10) or respectively of its housing.

6. Coffee mill according to one of claims 1 to 5, **characterised in that** the coffee bean hopper (9) includes a circumferential collar (19), which surrounds the delivery shaft (20), the grinding means (10) extending into this said collar.

7. Coffee mill according to one of claims 1 to 6, **characterised in that** the coffee bean hopper (9) is detachable relative to the grinding means (10) and is connected to said grinding means by means of a bayonet locking means.

8. Coffee mill according to one of claims 1 to 7, **characterised in that** the coffee mill (10) is part of an automatic coffee machine (1).

9. Automatic coffee machine with a coffee mill, comprising a coffee bean hopper (9) with a delivery shaft (20) at the bottom and with a grinding means (10) which is disposed underneath the delivery shaft (20), **characterised in that** the coffee bean hopper (9) is divided by developing at least two compartments (13, 14), wherein the compartments (13, 14) of the coffee bean hopper (9) open out into the delivery shaft (20), and **in that** the automatic coffee machine (1) includes a closing member (22) for the optional closing of the output (17, 18) at least of one compartment (13, 14), wherein the closing member (22) and the grinding means (10) form one unit and the coffee bean hopper (9) is disposed so as to be rotatable relative to the unit formed by the closing element (22) and the grinding means (10).

10. Automatic coffee machine according to claim 9, **characterised in that** the closing member is in the form of a disc, via which the inlet of the grinding means, which is open at the top, is closed in a proportional manner.

11. Automatic coffee machine according to claim 9, **characterised in that** the coffee bean hopper (9) includes a conducting element (15) for the supplying of coffee beans to the side into the delivery shaft (20) and the closing member (22) is disposed underneath the conducting element (15) and is adapted by its outline to the bottom of the conducting element (15) and to the outlets (17, 18) of the compartments (13, 14) formed by the said conducting element.

12. Automatic coffee machine according to claim 9 or 10, **characterised in that** the closing member (22) is connected to the grinding means (10) or respectively to its housing (21) in a form-locking manner with reference to the rotatability of the coffee bean hopper (9).

13. Automatic coffee machine according to claim 12, **characterised in that** the closing member (22) supports a radially protruding cam (23), which engages into a receiving means of the grinding means (10) or respectively of its housing (21).

14. Automatic coffee machine according to one of claims 9 to 13, **characterised in that** the coffee bean hopper (9) includes a circumferential collar (19), which surrounds the delivery shaft (20), the grinding means (10) extending into the said collar.

15. Automatic coffee machine according to claims 9 to 14, **characterised in that**, for its division into the at least two compartments, the coffee bean hopper includes a wall, which is removable out of the coffee bean hopper.

16. Automatic coffee machine according to one of claims 9 to 15, **characterised in that** the coffee bean hopper (9) is detachable relative to the grinding means (10) and is connected to said grinding means by means of a bayonet locking means.
